# EUROPEAN PATENT APPLICATION

(11) **EP 3 993 326 A1**
(43) Date of publication of application: **04.05.2022**
(21) Application number: 20832975.5
(22) Date of filing: 22.06.2020
(51) Int. Cl.: H04L 12/70, G06F 8/60, G06F 13/00

(54) **IOT CONNECTION SYSTEM, INFORMATION PROCESSING METHOD, AND COMPUTER PROGRAM**

(30) Priority: 27.06.2019 JP 2019119447
(71) Applicant: IOT-EX Inc., Tokyo, 101-0043 (JP)
(72) Inventor: MATSUMURA Jun, Tokyo 101-0043 (JP); OBATA Yoshihiro, Tokyo 101-0043 (JP)
(74) Representative: REHBERG HÜPPE + PARTNER
(86) International application number: PCT/JP2020/024477
(87) International publication number: WO 2020/262328

(57) **Abstract**

An attractive service is provided by freely mutually connecting existing loT devices in a silo state for each private cloud via the Internet. An loT connection system includes an loT hub that is realized over a cloud and a local loT router that is connected to the loT hub. The loT hub includes a first driver configured to connect the loT hub to a private cloud to which a first device is able to be connected and a second driver configured to connect the loT hub to a second device. The loT router includes a third driver configured to connect a third device to the loT router. Information which a user is to describe to create the first driver, the second driver, and the third driver is limited to information on device definitions and command definitions.

## Description

### TECHNICAL FIELD

The present invention relates to an loT connection system, an information processing method and a computer program.

### PRIOR ART

Recently, the number of devices that can access the Internet and receive various services has increased. Such devices are called Internet of Things (loT) devices.

In general, since such loT devices are individually connected to dedicated private clouds, loT devices with different specifications which are manufactured by different makers cannot be connected to the same private cloud.

Recently, an loT cloud service which is called an loT hub that can allow loT devices manufactured by various makers to be connected thereto by publishing an application programming interface (API) for connection to a cloud or providing a software development kit (SDK) or the like has also been provided (such as Non Patent Literature 1 and Non Patent Literature 2).
Non Patent Literature 1: "Azure loT Hub", Microsoft, [retrieved June 2, 2019], Internet <https://azure.microsoft.com/ja-jp/services/iot-hub/>
Non Patent Literature 1: "AWS loT", Amazon Web Services, [retrieved June 2, 2019], Internet <https://aws.amazon.com/jp/iot/>

### TECHNICAL PROBLEM

Although the aforementioned loT cloud services exist, cooperation between the services is limited and makers of loT devices need to develop dedicated connection programs which differ depending on the services and incorporate the programs into the devices.

Therefore, an objective of the invention is to provide an attractive service by freely mutually connecting existing loT devices in a silo state for each private cloud via the Internet.

### SOLUTION TO PROBLEM

An loT connection system according to the invention is an loT connection system including an loT hub that is realized over a cloud and a local loT router that is connected to the loT hub, characterized in that the loT hub includes a first driver configured to connect the loT hub to a private cloud to which a first device is able to be connected and a second driver configured to connect the loT hub to a second device, the loT router includes a third driver configured to connect a third device to the loT router, and information which a user is to describe to create the first driver, the second driver, and the third driver is limited to information on device definitions and command definitions.

At least one of the first driver, the second driver, and the third driver may realize a virtual device function of virtually reproducing the first device, the second device, or the third device.

The loT hub may realize a directory function of causing the first device, the second device, the third device, and an loT service available via the loT hub to cooperate with each other.

The directory function may identify the first device, the second device, the third device, or the loT service and give an instruction to the first device, the second device, the third device, or the loT service.

The loT hub may include a Web API for use of an loT application.

Information which is acquired from the first device, the second device, or the third device may not be stored in the loT hub.

A computer program according to the invention is a computer program causing one or more computer processors in an loT connection system including an loT hub that is realized over a cloud and a local loT router that is connected to the loT hub to perform: a connection function of connecting a private cloud to which one or more devices are able to be connected and the loT hub, the device and the loT hub, or the device and the loT router; a storage function of storing information on device definitions and command definitions described by a user; a reception function of receiving a command for the device; an operation function of operating the device on the basis of the information stored by the storage function and the command received by the reception function; and a processing function of performing a pre-process of collecting result data of an operation based on the operation function.

An information processing method according to the invention is an information processing method that is performed by one or more computer processors in an loT connection system including an loT hub that is realized over a cloud and a local loT router that is connected to the loT hub, the information processing method including: a connection step of connecting a private cloud to which one or more devices are able to be connected and the loT hub, the device and the loT hub, or the device and the loT router; a reception step of receiving a command for the device; an operation step of operating the device on the basis of information on device definitions and command definitions described by a user and the command received in the reception step; and a processing step of performing a pre-process of collecting result data of an operation in the operation step.

### ADVANTAGEOUS EFFECTS OF INVENTION

According to the invention, it is possible to provide an attractive service by freely mutually connecting existing loT devices in a silo state for each private cloud via the Internet.

Specifically, according to the invention, it is possible to easily mutually connect loT devices connected to existing private clouds as well as those directly connected loT devices.

According to the invention, it is possible to flexibly and easily connect various types of loT devices.

### BRIEF DESCRIPTION OF THE DRAWINGS

- **FIG. 1**: is a system configuration diagram illustrating an example of a configuration of an loT connection system according to an embodiment of the invention.
- **FIG. 2**: is a diagram illustrating an example of a plurality of private clouds in the loT connection system according to the embodiment of the invention.
- **FIG. 3**: is a diagram illustrating an example of a plurality of first devices which are connected to private clouds in the loT connection system according to the embodiment of the invention.
- **FIG. 4**: is a diagram illustrating an example of a flow of a service which is provided by the loT connection system according to the embodiment of the invention.
- **FIG. 5**: is a diagram illustrating an example of a flow of a service which is provided by the loT connection system according to the embodiment of the invention.
- **FIG. 6**: is a diagram illustrating another example of a flow of a service which is provided by the loT connection system according to the embodiment of the invention.
- **FIG. 7**: is a diagram illustrating an example of a flow of a virtual driver function which is provided by the loT connection system according to the embodiment of the invention.
- **FIG. 8**: is a diagram illustrating another example of a flow of a virtual driver function which is provided by the loT connection system according to the embodiment of the invention.
- **FIG. 9**: is a flowchart illustrating an example of a flow of an information processing method according to an embodiment of the invention.

### DESCRIPTION OF EMBODIMENTS

Hereinafter, an loT connection system according to an embodiment of the invention will be described with reference to the accompanying drawings.

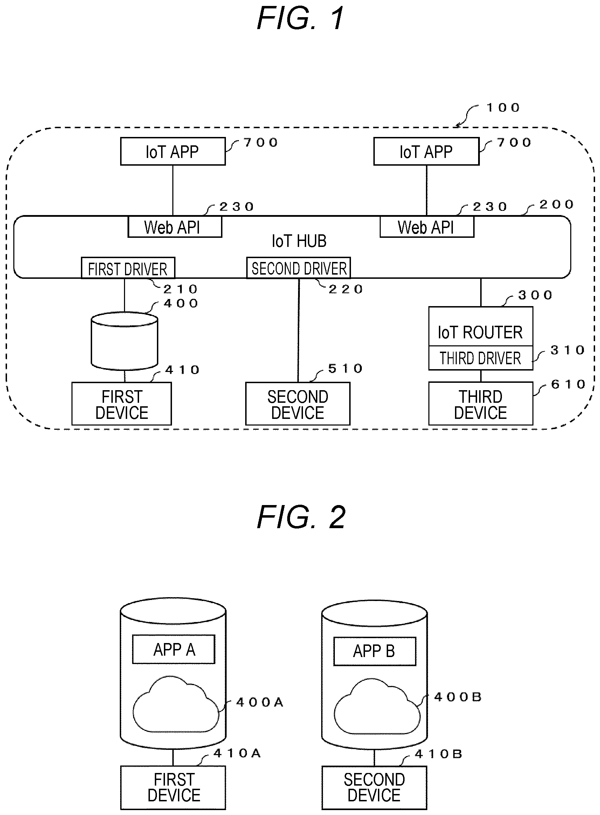

As illustrated in **FIG. 1****,** an loT connection system 100 according to the invention includes an loT hub 200 and an loT router 300.

The loT hub 200 is realized over a cloud. Specifically, the loT hub 200 is a managed service hosted in a cloud and serves as a relay for bidirectional communication between an loT application (hereinafter referred to as an "loT app") and an loT device.

The loT router 300 is local and is connected to the loT hub 200 by a wide area network (WAN).

Specifically, the loT router 300 serves to realize connection of an loT device that is not connected to the Internet, such as an in-house network, to the loT hub 200.

The loT hub 200 includes a first driver 210 and a second driver 220.

The first driver 210 and the second driver 220 serve to absorb a difference in specifications between makers of loT devices.

The first driver 210 serves to connect a private cloud 400 to which a first device 410 is able to be connected to the loT hub 200.

For example, it is preferable that the first device 410 and the private cloud 400 be connected by a local area network (LAN) and the private cloud 400 and the first driver 210 be connected by a WAN.

The private cloud 400 is provided by a provider of the first device 410. The number of private clouds 400 in FIG. 1 is one, but it is not limited thereto and a plurality of private clouds 400 may be connected to the loT hub 200. The loT hub 200 may include a plurality of first drivers 210.

FIG. 2 illustrates details of two private clouds 400A and 400B which are provided by different providers A and B. As illustrated in FIG. 2, the private cloud 400A is connected to an application A (hereinafter referred to as "app A") which is provided by a provider A and provides a service based on the app A to a first device 400A.

Similarly, the private cloud 400B is connected to an application B (hereinafter referred to as "app B") which is provided by a provider B and provides a service based on the app B to a first device 400B.

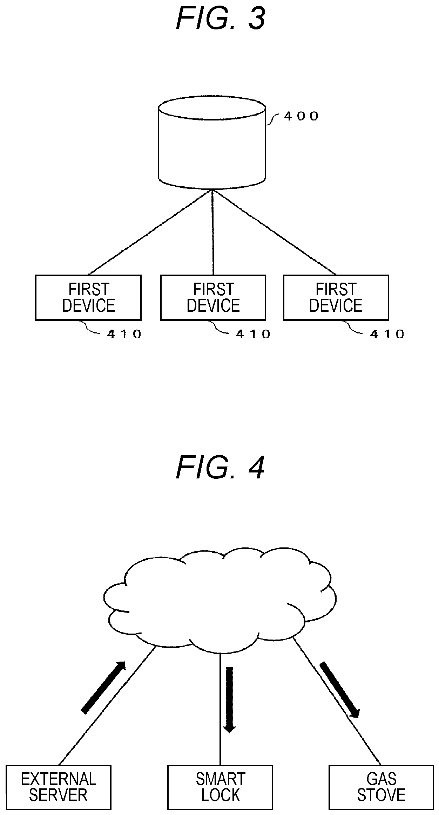

FIGS. 1 and 2 illustrate examples in which only one first device 410 is connected to one private cloud 400, but a plurality of first devices 410 may be connected to one private cloud 400 as illustrated in FIG. 3.

The first device 210 may be a device for which a private cloud is provided by a provider. Examples thereof include an electronic lock having a remote lock function, an AI speaker, and a nursing bed which is able to be remotely operated, but the first device is not particularly limited thereto.

The second driver 220 serves to directly connect a second device 510 to the loT hub 200.

For example, it is preferable that the second device 510 and the second driver 220 be connected by a LAN.

FIG. 1 illustrates an example in which only one second device 510 is connected to the second driver 220, but a plurality of second devices 510 may be connected to one second driver 220. The loT hub 200 may include a plurality of second drivers 220.

The second device 220 may be a device for which a private cloud is not provided by a provider. Examples thereof include a fan, an air conditioner, a window, a curtain, and a light, but the second device is not particularly limited thereto.

The loT router 300 includes a third driver 310. The loT router 300 may include a plurality of third drivers 310.

The third driver 310 serves to connect a third device 610 to the loT router 300.

For example, it is preferable that the third device 610 and the third driver 310 be connected by a LAN and the loT router 300 and the loT hub 200 be connected by a WAN.

As described above, the third device 610 may be an loT device which is not connected to the Internet such as an in-house network. The third device 610 may be a device which should not be directly connected to the loT hub 200 from a point of view of security, privacy, and safety. Examples thereof include a gas stove, a face authentication device, and a sensor information collection data logger, but the third device is not particularly limited thereto.

In this way, the loT connection system 100 according to the invention is a hybrid type loT connection system that connects some devices to a local loT router 300 instead of directly connecting all devices to the loT hub 200 in a cloud.

With this configuration, it is possible to easily mutually connect loT devices connected to an existing private cloud as well as loT devices which are directly connected.

Accordingly, unlike the related art in which only loT devices of predetermined makers are connected, it is possible to easily mutually connect loT devices of various makers. By mutually connecting loT devices of various makers, it is possible to provide a unique service which was not provided in the related art.

For example, with the loT connection system 100 according to the invention, when emergency earthquake news is received from an external server as illustrated in **FIG. 4****,** it is possible to easily realize a service of transmitting a flameout signal to a gas stove and unlocking a front door.

In the loT connection system 100 according to the invention, information which a user should describe to create the first driver 210, the second driver 220, and the third driver 310 is limited to information on device definitions and command definitions.

A method of creating the first driver 210, the second driver 220, and the third driver 310 will be described below. A creator may be a user associated with manufacturing and development of loT devices or a user associated with provision of the loT connection system according to the invention.

Regarding the first driver 210, the second driver 220, and the third driver 310, information of the same details can be described, and it may be described in different programming languages.

First, a creator defines an available device list as device definitions. For example, when a "weather sensor", an "indoor sensor", an "outdoor sensor", a "suspicious person sensor", an "approval sensor", and a "power sensor" are defined as available devices, names thereof and "weather", "inhouse", "outdoor", "security", "approve", and "power" which are IDs thereof are described.

Subsequently, the creator defines available commands as command definitions. For example, when available commands for the "outdoor sensor" are defined, an observation command for a sensor value is described. Examples of the observation command include "observe", "get", and "observe outdoors".

By causing a creator to embed such information on device definitions and command definitions in a program in a hole filling manner, the first driver 210, the second driver 220, and the third driver 310 can be completed. The other parts can be provided as an SDK from a provider.

The SDK part includes a part associated with a device operation process in the received command, a part associated with a pre-process of the collected sensor data/operation result data, and a part associated with a process of transmitting data to the loT hub.

With this configuration, since drivers for various types of loT devices can be simply completed, it is possible to realize an loT connection system that can flexibly and easily connect loT devices.

In general, the technical field of engineers associated with device development is different from that of engineers for Web development and many engineers for device development do not have the technical expertise to connect devices to an loT hub.

Accordingly, as in the invention, it is very profitable for any driver program to be able to be created using a simple method in a common hole plugging manner. Accordingly, it is possible to reduce development costs or development periods associated with connection of an loT device to an loT hub in comparison with those in the related art.

Even when there is a difference in allowable costs like a fan and an air conditioner, it is possible to equally realize connection thereof to an loT hub through a decrease in development cost.

Connection between an loT hub 200 and an loT app associated with the loT connection system 100 according to the invention will be described below.

As illustrated in FIG. 1, an loT hub 200 may include a Web API 230 for use of an loT application 700. As illustrated in FIG. 1, loT applications 700 corresponding to the number of services can be connected and each can be connected using a Web API 230.

Each loT application 700 is created by describing a data acquisition logic from an loT device (sensor) and/or an operation logic of the loT devices in an application.

The data acquisition logic includes a part for pre-processing the acquired sensor data and a part for performing transmission to an API of the loT hub 200. Necessary information includes a destination URL which is provided by a provider of the loT connection system 100, an API key which is provided by a provider, device information, and an execution command.

The device operation logic includes a part for pre-processing a command for a device to be operated and a part for performing transmission to an API of the loT hub 200. Necessary information includes a destination URL which is provided by the provider of the loT connection system 100, an API key which is provided by the provider, device information, and an execution command.

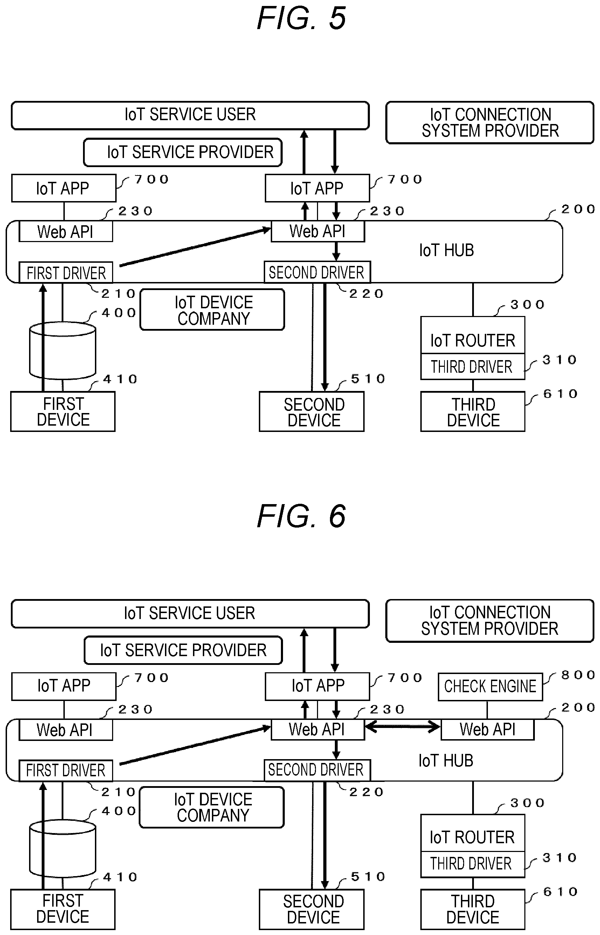

**FIG. 5** is a diagram illustrating a flow in which an loT service user (an end user) is provided with an loT service from an loT service provider using an loT device which is provided by the loT service provider. As illustrated in FIG. 5, when an event is first transmitted from a first device 410, the end user is notified of the event via the private cloud 400, the first driver 210, the Web API 230, and the loT application 700.

Subsequently, when the end user determines an action, the second device 510 is instructed to execute the action via the loT application 700, the Web API 230, and the second driver 220.

Cooperation between loT devices can be expressed by an event-driving program such as "OO, if -". This process can be made into a component as a micro service, can be communized for use, and can be mounted as a function as a service (FaaS) function.

As illustrated in **FIG. 6****,** the loT hub 200 according to the invention can be connected to a check engine 800. The check engine 800 serves to check details of which a device is instructed by the loT hub 200 and to prevent an inappropriate action from being executed.

For example, when an loT service, "an air conditioner is stopped and a window is opened if outside air is fair", is provided, the inside may get wet if an unexpected rainstorm strikes immediately after, and the check engine 800 serves to prevent such a threat derived from an loT service.

At least one of the first driver 210, the second driver 220, and the third driver 310 according to the invention can realize a virtual device function.

The virtual device function is for virtually reproducing the first device 410, the second device 510, or the third device 610.

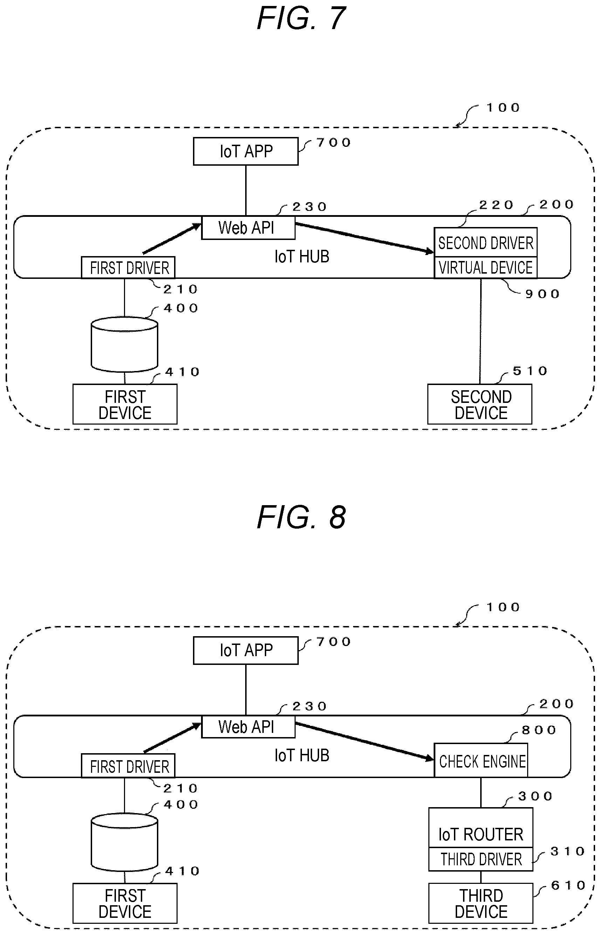

**FIG. 7** illustrates an example in which the second driver 220 according to the invention realizes the virtual device function. As illustrated in FIG. 7, by providing a virtual device 800 that can reproduce transmission and reception of a command for the second device 510 in the second driver 220, it is possible to develop an loT application using the second device 510 even when the second device 510 is not connected. When an operation failure occurs, it is possible to easily perform failure identification of determining which of the second device 510 and the loT hub 200 is out of order without visiting the spot.

According to the invention, the loT hub 200 may realize the virtual device function instead of a driver as illustrated in **FIG. 8****.** This is effective for failure identification of the third device 610 connected to the local loT router 300.

The loT hub 200 in the loT connection system 100 according to the invention can realize a directory function.

The directory function is for causing the first device 410, the second device 510, and the third device 610 to cooperate with an loT service which can be used via the loT hub 200.

That is, the directory function is for realizing a function of identifying objects or services such that a path from an object (device) to a service, from a service to an object, and from an object to an object can be ascertained and providing instructions to the objects or the services.

Specifically, the directory function can identify the first device 410, the second device 510, or the third device 610 or the loT service or provide instructions to the first device 410, the second device 510, or the third device 610 or the loT service.

In the loT connection system 100 according to the invention, information acquired from the first device 410, the second device 510, or the third device 610 may not be stored in the loT hub 200.

It is supposed that the loT connection system 100 according to the invention is run by a telecommunications carrier. A telecommunications carrier has an obligation to keep communication secrets, and thus does not store information acquired from various devices for other purposes of utilization.

Since such information is valuable information, an loT device is generally enclosed in a private cloud of each carrier in order to exclusively acquire such information.

On the other hand, with the loT connection system 100 according to the invention, since it is run by a telecommunications carrier, it is possible to mutually connect loT devices and loT applications at a neutral position and to promote loT business.

Since continuity of an loT mutual connection service affects continuity of an loT service of a corporation using the loT mutual connection service, it is preferable that the corporation share a mutual connection infrastructure.

In the loT connection system 100 according to the invention, only devices or loT applications which are permitted using an API key and an authentication scheme can be connected to the loT hub 200. That is, the loT connection system 100 according to the invention can construct a closed network dedicated for loT communication over the Internet. Since communication paths are encrypted and loT routers are managed by mobile device management (MDM), it is also possible to cope with new attacks or weaknesses of an OS or application.

When it is intended to connect non-loT devices to the loT hub 200, it is possible to perform development in a short time by utilizing backend as a service (BaaS) or SDK.

The provider of the loT connection system 100 can propose a mutual connection support service of an loT device. Specifically, it is possible to provide business matching and consulting services. That is, in order to provide added value, it is possible to search for necessary opponents and to perform introduction of value creation patterns and best practices thereto or the like.

It is possible to create an attractive service by combination with devices or applications of other providers and to expand business by bringing added value.

A computer program according to an embodiment of the invention will be described below.

A computer program according to the invention causes one or more computer processors in an loT connection system including an loT hub that is realized over a cloud and a local loT router that is connected to the loT hub to perform a connection function, a storage function, a reception function, an operation function, and a processing function.

The connection function is for connecting a private cloud to which one or more devices are able to be connected or the one or more devices and the loT hub. The connection function can be realized by the first driver 210, the second driver 220, or the third driver 310. Details of the first driver 210, the second driver 220, or the third driver 310 are the same as described above.

The storage function is for storing information on device definitions and command definitions described by a user. The storage function can be realized by the first driver 210, the second driver 220, or the third driver 310. Details of the first driver 210, the second driver 220, or the third driver 310 are the same as described above.

The reception function is for receiving a command for the device. The reception function can be realized by the first driver 210, the second driver 220, or the third driver 310. Details of t the first driver 210, the second driver 220, or the third driver 310 are the same as described above.

The operation function is for operating the device on the basis of the information stored by the storage function and the command received by the reception function. The operation function can be realized by the first driver 210, the second driver 220, or the third driver 310. Details of the first driver 210, the second driver 220, or the third driver 310 are the same as described above.

The processing function is for and performing a pre-process of collecting the result data of an operation based on the operation function. The processing function can be realized by the first driver 210, the second driver 220, or the third driver 310. Details of the first driver 210, the second driver 220, or the third driver 310 are the same as described above.

With this configuration, it is possible to easily mutually connect loT devices connected to an existing private cloud as well as loT devices which are directly connected.

With this configuration, it is possible to flexibly and easily connect various types of loT devices.

An information processing method according to an embodiment of the invention will be finally described below with reference to the accompanying drawings.

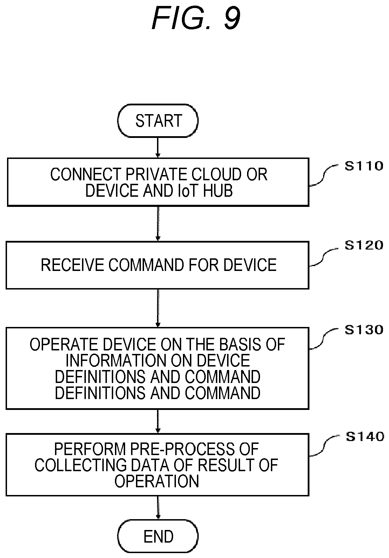

As illustrated in **FIG. 9****,** the information processing method according to the invention causes one or more computer processors in an loT connection system including an loT hub that is realized over a cloud and a local loT router that is connected to the loT hub to perform a connection step S110, a reception step S120, an operation step S130, and a processing step S140.

The connection step S110 is for connecting a private cloud to which one or more devices are able to be connected or the one or more devices and the loT hub. The connection step S110 can be realized by the first driver 210, the second driver 220, or the third driver 310. Details of the first driver 210, the second driver 220, or the third driver 310 are the same as described above.

The reception step S120 is for receiving a command for the device. The reception Step S120 can be realized by the first driver 210, the second driver 220, or the third driver 310. Details of the first driver 210, the second driver 220, or the third driver 310 are the same as described above.

The operation step S130 is for operating the device on the basis of information on device definitions and command definitions described by a user and the command received by the reception step. The operation step S130 can be realized by the first driver 210, the second driver 220, or the third driver 310. Details of the first driver 210, the second driver 220, or the third driver 310 are the same as described above.

The processing step S140 is for performing a pre-process of collecting the result data of an operation based on an operation step. The processing step S140 can be realized by the first driver 210, the second driver 220, or the third driver 310. Details of the first driver 210, the second driver 220, or the third driver 310 are the same as described above.

With this configuration, it is possible to easily mutually connect loT devices connected to an existing private cloud as well as loT devices which are directly connected.

With this configuration, it is possible to flexibly and easily connect various types of loT devices.

While some embodiments of the invention have been described above, the embodiments are merely presented as examples and are not intended to limit the scope of the invention. The embodiments can be embodied in various other forms and can be subjected to various omissions, substitutions, and alterations without departing from the gist of the invention. The embodiments or modifications thereof belong to the scope or gist of the invention and also belong to the inventions described in the appended claims and a scope equivalent thereto.

The techniques described above in the embodiments may be stored as a program which can be executed by a calculator (computer) in a recording medium such as a magnetic disk (such as a Floppy (registered trademark) disk or a hard disk), an optical disc (such as a CD-ROM, a DVD, or a MO), or a semiconductor memory (such as a ROM, a RAM, or a flash memory), or may be transmitted and distributed through a communication medium. The program stored in the medium side includes a setting program in which a software means (including a table or a data structure in addition to an execution program) which is performed by a calculator is installed in the calculator. The calculator that realizes the invention performs the aforementioned processes by reading a program recorded on a recording medium, constructing a software means using a setting program in some case, and controlling operations using the software means. The recording medium mentioned in this specification is not limited to a medium for distribution, and includes a storage medium such as a magnetic disk or a semiconductor memory that is provided in a calculator or a device connected thereto via a network. The storage unit may also serve as, for example, a main storage device, an auxiliary storage device, or a cache storage device.

### LIST OF REFERENCE NUMERALS

- 100: IoT connection system
- 200: loT hub
- 210: First driver
- 220: Second driver
- 230: Web API
- 300: loT router
- 310: Third driver
- 400: Private cloud
- 410: First device
- 510: Second device
- 610: Third device
- 700: loT app
- 800: Check engine

## Claims

1. An loT connection system, comprising:
an loT hub that is realized over a cloud; and
a local loT router that is connected to the loT hub,
wherein the loT hub includes:
a first driver configured to connect the loT hub to a private cloud to which a first device is able to be connected, and
a second driver configured to connect the loT hub to a second device,
wherein the loT router includes a third driver configured to connect a third device to the loT router, and
wherein information which a user is to describe to create the first driver, the second driver, and the third driver is limited to information on device definitions and command definitions.

2. The loT connection system according to claim 1, wherein at least one of the first driver, the second driver and the third driver realizes a virtual device function of virtually reproducing the first device, the second device or the third device.

3. The loT connection system according to claim 1 or 2, wherein the loT hub realizes a directory function of causing the first device, the second device, the third device and an loT service available via the loT hub to cooperate with each other.

4. The loT connection system according to claim 3, wherein the directory function identifies the first device, the second device, the third device or the loT service and gives an instruction to the first device, the second device, the third device or the loT service.

5. The loT connection system according to any one of claims 1 to 4, wherein the loT hub includes a Web API for use of an loT application.

6. The loT connection system according to any one of claims 1 to 5, wherein information which is acquired from the first device, the second device or the third device is not stored in the loT hub.

7. A computer program causing one or more computer processors provided in an loT hub of an loT connection system including the loT hub that is realized over a cloud and a local loT router that is connected to the loT hub to perform:
a connection function of connecting a private cloud to which a device is able to be connected and the loT hub, the device and the loT hub or the device and the loT router;
a storage function of storing information on device definitions and command definitions described by a user;
a reception function of receiving a command for the device;
an operation function of operating the device on the basis of the information stored by the storage function and the command received by the reception function; and
a processing function of collecting result data of an operation using the operation function and performing a pre-process of the collected data.

8. An information processing method that is performed by one or more computer processors provided in an loT hub of an loT connection system including an loT hub that is realized over a cloud and a local loT router that is connected to the loT hub, the information processing method comprising:
a connection step of connecting a private cloud to which a device is able to be connected and the loT hub, the device and the loT hub or the device and the loT router;
a reception step of receiving a command for the device;
an operation step of operating the device on the basis of information on device definitions and command definitions described by a user and the command received in the reception step; and
a processing step of collecting result data of an operation in the operation step and performing a pre-process of the collected data.
